Europäisches Patentamt

European Patent Office

Office européen des brevets

(11) Veröffentlichungsnummer: **0 512 335 A2**

# (12) EUROPÄISCHE PATENTANMELDUNG

(21) Anmeldenummer: **92106996.9**

(22) Anmeldetag: **24.04.92**

(51) Int. Cl.$^5$: **C08G 63/20**

(30) Priorität: **07.05.91 DE 4114800**

(43) Veröffentlichungstag der Anmeldung:
**11.11.92 Patentblatt 92/46**

(84) Benannte Vertragsstaaten:
**DE FR GB IT SE**

(71) Anmelder: **BAYER AG**

**W-5090 Leverkusen 1 Bayerwerk(DE)**

(72) Erfinder: **Hurnik, Helmut, D.I.**
**Dechant-Krey-Strasse 24**
**W-5090 Leverkusen 3(DE)**
Erfinder: **Trümmelmeyer, Gerhard, D.I.**
**Samlandweg 4**
**W-5653 Leichlingen(DE)**
Erfinder: **Winkler, Adolf, Dr.**
**Christian-Hess-Strasse 69**
**W-5090 Leverkusen(DE)**

(54) **Polyesterpolyole sowie deren Verwendung als Haftvermittler für Polymersysteme und als Polymerweichmacher.**

(57) Die neuen Polyesterpolyole mit einer Säurezahl unter 10, einer Hydroxylzahl von 50 bis 200, einer Hydroxylfünktionalität von über 2, einem als Zahlenmittel $M_n$ bestimmten Molekulargewicht von 800 bis 5000, welche bei 23°C flüssig oder mit einer Konzentration von mindestens 70 Gew.-% in Di-2-ethyl-hexylphthalat homogen löslich sind und wobei die Viskosität der 70 %igen Lösung im Bereich von 1 bis 35 Pa.s liegt, finden Verwendung als Haftvermittler für Polymersysteme und als Polymerweichmacher.

EP 0 512 335 A2

Die vorliegende Erfindung betrifft neue Polyesterpolyole sowie deren Verwendung als Haftvermittler für Polymersysteme und als Polymerweichmacher.

Polyesterpolyole als Haftvermittler in Kombination mit Polyisocyanaten sind beispielsweise beschrieben in der europäischen Patentanmeldung 0 150 803. Die dort beschriebenen Hydroxylgruppen-haltigen Polyester können beispielsweise aufgebaut sein aus Adipinsäure, Hexandiol-1,6 und Trimethylolpropan-1,1,1. Nachteilig bei den dort beschriebenen Polyesterpolyolen für den Einsatz als Haftvermittler ist deren schwierige Handhabbarkeit und die nicht immer ausreichende Haftfestigkeit.

Neben der Verwendung von Polyesterpolyolen als Haftvermittler in Polymersystemen werden Polyesterpolyole auch als Polymerweichmacher eingesetzt. Die als Polymerweichmacher eingesetzten Polyesterpolyole besitzen einen linearen Polymeraufbau und haben eine OH-Funktionalität von $\leqq$ 2. Nachteilig bei diesen als Polymerweichmacher eingesetzten Polyesterpolyolen ist deren nicht zufriedenstellende Migrations- und Extraktionsbeständigkeit.

Gegenstand der vorliegenden Erfindung sind neue Polyesterpolyole mit einer Säurezahl unter 10, einer Hydroxylzahl von 50 bis 200, einer Hydroxylfunktionalität von über 2, einem als Zahlenmittel $M_n$ bestimmten Molekulargewicht von 800 bis 5000, welche bei 23°C flüssig oder mit einer Konzentration von mindestens 70 Gew.-% in Di-2-ethyl-hexyl-phthalat (DOP) homogen (einphasig) löslich sind und wobei die Viskosität der 70 %igen Lösung im Bereich von 1 bis 35 Pa.s liegt, hergestellt aus

A) gegebenenfalls aromatischen Dicarbonsäuren enthaltenden aliphatischen $C_6$-$C_{10}$-Dicarbonsäuren,

B) 1,6-Hexandiol und gegebenenfalls 1,4-Butandiol und

C) einer oder mehreren aromatischen Tricarbonsäuren,

wobei die Komponenten A), B) und C) in einem Molverhältnis von 1:1:(0,05-0,4), bevorzugt 1:1:(0,1-0,35), vorhanden sind.

Die erfindungsgemäßen Polyesterpolyole besitzen bevorzugt eine Säurezahl von 1 bis 6, besonders bevorzugt 1,5 bis 5. Die Hydroxylzahl liegt bevorzugt bei 60 bis 150, die Hydroxylfunktionalität beträgt bevorzugt 2,1 bis 3,5, ganz besonders bevorzugt 2,15 bis 3,2, das Molekulargewicht liegt bevorzugt bei 1000 bis 3000.

Als aliphatische $C_6$-$C_{10}$-Dicarbonsäuren, die als Komponente A) eingesetzt werden können, werden beispielsweise genannt: Adipinsäure, Azelainsäure und/oder Sebacinsäure.

Als aromatische Dicarbonsäuren, die den aliphatischen Dicarbonsäuren gegebenenfalls zugemischt werden können, werden beispielsweise genannt: Phthalsäure und/oder Isophthalsäure. Selbstverständlich ist es auch möglich, die entsprechenden Anhydride der aromatischen Dicarbonsäuren einzusetzen.

Die aromatischen Dicarbonsäuren können den aliphatischen Dicarbonsäuren bei der Komponente A) in Mengen von bis zu 25 Mol-%, bevorzugt 5 bis 20 Mol-%, zugemischt werden.

Als Komponente B) kann dem 1,6-Hexandiol 1,4-Butandiol zugemischt sein. Die Menge an zugemischtem 1,4-Butandiol beträgt bis zu 50 Mol-%, bevorzugt 5 bis 35 Mol-%.

Das 1,6-Hexandiol der Komponente B) kann anstelle des 1,4-Butandiols noch bis zu 25 Mol-%, bevorzugt 5 bis 20 Mol-%, lineares $C_3$- und/oder $C_4$-Alkandiol mit einer primären und einer sekundären OH-Gruppe pro Molekül oder bis zu 30 Mol-%, bevorzugt 5 bis 25 Mol-%, eines verzweigten $C_5$-$C_8$-Alkandiols enthalten.

Als lineare $C_3$-$C_4$-Alkandiole werden bevorzugt genannt: 1,2-Propanol und/oder 1,3-Butandiol. Als verzweigte $C_5$-$C_8$-Alkandiole werden bevorzugt genannt: 2,2-Dimethylpropandiol-1,3, 2-Methyl-2-propyl-1,3-propandiol und/oder 2-Ethyl-1,3-hexandiol.

Als aromatische Tricarbonsäuren der Komponente C) werden bevorzugt genannt: 1,2,4-Benzoltricarbonsäure (Trimellithsäure) und/oder 1,3,5-Benzoltricarbonsäure (Trimesinsäure). Selbstverständlich kann auch das Anhydrid der Trimellithsäure eingesetzt werden.

Die aromatischen Tricarbonsäuren sowie die als Verschnitt der Komponente B) zugesetzten Alkandiole können untereinander in jedem beliebigen Mengenverhältnis eingesetzt werden. Das günstigste Mengenverhältnis kann jeweils durch geeignete Vorversuche ermittelt werden.

Bei den erfindungsgemäßen Polyesterpolyolen kann das 1,6-Hexandiol B) vollständig durch das 1,4-Butandiol ersetzt sein. Dabei ist es jedoch erforderlich, daß dann die Komponente A) aus mindestens zwei aliphatischen Dicarbonsäuren besteht, wobei das Verhältnis der Dicarbonsäuren mit einer geringeren Kohlenstoffzahl zu den Dicarbonsäuren mit einer höheren Kohlenstoffzahl bei 90:10 bis 30:70 liegt, und zusätzlich bis zu 40 Mol-%, bevorzugt 5 bis 30 Mol-%, an verzweigten $C_5$-$C_8$-Alkandiolen enthält.

Die erfindungsgemäßen Polyesterpolyole können nach bekannten Verfahren hergestellt werden (siehe z.B. Ullmanns Encyklopädie der technischen Chemie, 14. Band, Kap. Polyester, S. 80 ff./Herausgeber: W. FOERST, Verlag URBAN & SCHWARZENBERG, München - Berlin, 1963).

Bevorzugt werden die erfindungsgemäßen Polyesterpolyole nach einem 2-stufigen Schmelzkondensationsverfahren hergestellt, insbesondere bei Verwendung von Trimellithsäureanhydrid.

Ein weiterer Gegenstand der Erfindung ist die Verwendung der neuen Polyesterpolyole als Haftvermittler für Polymersysteme, vorzugsweise in PVC-Plastisolen und in wäßrigen Polymerdispersionen (siehe z.B. EP-0 150 803). Die erfindungsgemäßen Polyesterpolyole ergeben in Kombination mit Polyisocyanaten - eingesetzt in Polymersystemen - eine hohe Haftfestigkeit auf Polyester-, Polyamid- und anderen polymeren Substraten.

Darüber hinaus können die neuen Polyesterpolyole als Polymerweichmacher eingesetzt werden, wobei gute Verträglichkeit mit monomeren Weichmachern (z.B. Dialkylphthalaten, Alkylsulfonsäureester und Trimellithsäureestern) besteht. Die erfindungsgemäßen Polyesterpolyole besitzen im Hinblick auf den Einsatz als Polymerweichmacher eine verbesserte Migrations- und Extraktionsbeständigkeit. Der Einsatz von Polyesterpolyolen als Polymerweichmacher ist beispielsweise beschrieben von H. Kittel in Lehrbuch der Lacke und Beschichtungen, Band III: Lösemittel, Weichmacher, Additive, Zwischenprodukte/Verlag W. A. Dolomb, 7274 Oberschwandorf (1976).

Beispiele

Die nachstehend aufgeführten Beispiele dienen der weiteren Erläuterung der Erfindung.

Alle erfindungsgemäßen Polyesterpolyole wurden in einer Standard-Veresterungsapparatur hergestellt, bestehend aus einem Vierhals-Glaskolben versehen mit einem Flügelrührer, Destillationsaufsatz, Thermometer und $N_2$-Anschluß. Als Beheizung diente ein Ölbad.

Beispiel 1

| Reaktionsansatz: | | | |
|---|---|---|---|
| Komponente | eingesetztes Produkt | Menge (g) | n-Mol |
| K1 | Adipinsäure | 731 | 5,0 |
| K2 | Azelainsäure | 941 | 5,0 |
| K3 | 1,6-Hexandiol | 1.900 | 16,1 |
| K4 | 1,2-Propandiol | 213 | 2,8 |
| K5 | Trimesinsäure | 526 | 2,5 |

Durchführung der Schmelzkondensation:

Die einzelnen Komponenten K 1-K 5 wurden in das Reaktionsgefäß eingetragen und im $N_2$-Strom bis zu einer Innentemperatur von 145 bis 147°C aufgeheizt (Beginn der Kondensation). Bei einer Temperatur von 100 bis 102°C am Kopf des Destillationsaufsatzes wurde dann innerhalb von 2,5 Stunden Wasser abdestilliert und verestert. Anschließend wurde innerhalb von 2,5 Stunden das Reaktionsgemisch auf 190°C aufgeheizt und 15 Stunden bei 190°C ±2° unter Normaldruck verestert. Dabei fielen 506 g Destillat 1 an. Anschließend wurde stufenweise Vakuum angelegt und bei 190°C ±2° insgesamt 5 Stunden bei max. 18 mbar nachverestert. Die Menge an Destillat lag bei 99 g.

Das erhaltene Polyesterpolyol ist bei 23°C flüssig.

Es weist eine Säurezahl von 3,9 mg KOH/g und eine Hydroxylzahl von 114 mg KOH/g auf.

Die 70 %ige Lösung des Polyesterpolyols in Di-2-ethylhexyl-phthalat hat eine Viskosität von 6,5 Pa.s bei 23°C.

Beispiel 2

| Reaktionsansatz: | | | |
|---|---|---|---|
| Komponente | eingesetztes Produkt | Menge (g) | n-Mol |
| K1 | Adipinsäure | 1.023 | 7,0 |
| K2 | Phthalsäureanhydrid | 148 | 1,0 |
| K3 | 1,6-Hexandiol | 1.250 | 10,6 |
| K4 | 2,2-Dimethylpropandiol-1,3 | 468 | 4,5 |
| K5 | Trimellithsäureanhydrid | 384 | 2,0 |

Durchführung der Schmelzkondensation:

Die Komponenten K 1-K 4 wurden in das Reaktionsgefäß eingetragen und im $N_2$-Strom innerhalb von 2 Stunden bis zu einer Innentemperatur von 159°C aufgeheizt und unter Normaldruck kondensiert. Die Übergangstemperatur am Kopf des Destillationsaufsatzes betrug 100 bis 102°C. Die Menge an Destillat 1 war 186 g. Anschließend wurden 50 % von K 5 (192 g Trimellithsäureanhydrid) in das Reaktionsgefäß eingetragen und 1,75 Stunden bei 160 bis 170°C weiterverestert. Dabei wurden 120 g an Destillat 2 überdestilliert. Danach wurde die restliche Menge (192 g) von K 5 zugesetzt und innerhalb von 3 Stunden die Veresterungstemperatur von 170°C auf 190°C gesteigert. Bei 190°C ± 2° wurde über 14 Stunden unter Normaldruck weiterverestert. Die Menge an angefallenem Destillat 3 war 108 g. Anschließend wurde stufenweise Vakuum angelegt und 5 Stunden bei 90°C ±2° und max. 18 mbar nachverestert. Dabei wurden 106 g Destillat 4 abdestilliert. Das erhaltene Polyesterpolyol ist bei 23°C flüssig.
Es weist eine Säurezahl von 4,6 mg KOH/g und eine Hydroxylzahl von 92 mg KOH/g auf.
Die 70 %ige Lösung des Polyesterpolyols in Di-2-ethylhexyl-phthalat hat eine Viskosität von 23,5 Pa.s bei 23°C.

Beispiel 3

| Reaktionsansatz: | | | |
|---|---|---|---|
| Komponente | eingesetztes Produkt | Menge (g) | n-Mol |
| K1 | Adipinsäure | 1.023 | 7,0 |
| K2 | Phthalsäureanhydrid | 148 | 1,0 |
| K3 | 1,6-Hexandiol | 1.782 | 15,1 |
| K4 | Trimellithsäureanhydrid | 384 | 2,0 |

Die Durchführung der Schmelzkondensation der Komponenten K 1-K 4 erfolgte analog Beispiel 2.
Das erhaltene Polyesterpolyol ist bei 23°C flüssig. Es weist eine Säurezahl von 4,6 mg KOH/g und eine Hydroxylzahl von 132mg KOH/g auf.
Die 70 %ige Losung des Polyesterpolyols in Di-2-ethylhexyl-phthalat hat eine Viskosität von 4,0 Pa.s bei 23°C.

Beispiel 4

| Reaktionsansatz: | | | |
|---|---|---|---|
| Komponente | eingesetztes Produkt | Menge | n-Mol |
| K1 | Adipinsäure | 1.096 | 7,5 |
| K2 | 1,6-Hexandiol | 1.571 | 13,32 |
| K3 | 1,2-Propandiol | 175 | 2,3 |
| K4 | Trimellithsäureanhydrid | 480 | 2,5 |

Die Durchführung der Schmelzkondensation der Komponenten K 1-K 4 erfolgte analog Beispiel 2.

Das erhaltene Polyesterpolyol ist bei 23°C hochviskos und flüssig. Es weist eine Säurezahl von 1,8 mg KOH/g und eine Hydroxylzahl von 122 mg KOH/g auf.

Die 70 %ige Lösung des Polyesterpolyols in Di-2-ethylhexyl-phthalat hat eine Viskosität von 8,0 Pa.s bei 23°C.

Beispiel 5

| Reaktionsansatz: | | | |
|---|---|---|---|
| Komponente | eingesetztes Produkt | Menge (g) | n-Mol |
| K1 | Adipinsäure | 1.023 | 7,0 |
| K2 | Phthalsäureanhydrid | 148 | 1,0 |
| K3 | 1,6-Hexandiol | 1.250 | 10,6 |
| K4 | 1,3 Butandiol | 410 | 4,5 |
| K5 | Trimellithsäureanhydrid | 384 | 2,0 |

Die Durchführung der Schmelzkondensation der Komponenten K 1-K 5 erfolgte analog Beispiel 2.

Das erhaltene Polyesterpolyol ist bei 23°C flüssig. Es weist eine Säuren von 3,2 mg KOH/g und eine Hydroxylzahl von 122 mg KOH/g auf.

Die 70 %ige Lösung des Polyesterpolyols in Di-2-ethylhexyl-phthalat hat eine Viskosität von 5,4 Pa.s bei 23°C.

Beispiel 6

| Reaktionsansatz: | | | |
|---|---|---|---|
| Komponente | eingesetztes Produkt | Menge (g) | n-Mol |
| K1 | Adipinsäure | 548 | 3,75 |
| K2 | Azelainsäure | 830 | 3,75 |
| K3 | 1,6-Hexandiol | 1.818 | 15,40 |
| K4 | Trimesinsäure | 525 | 2,5 |

Die Durchführung der Schmelzkondensation der Komponenten K 1-K 4 erfolgte analog Beispiel 1.

Das erhaltene Polyesterpolyol ist bei 23°C flüssig und hochviskos. Es weist eine Säurezahl von 3,8 mg KOH/g und eine Hydroxyl von 106 mg KOH/g auf.

Die 70 %ige Lösung des Polyesterpolyols in Di-2-ethylhexyl-phthalat hat eine Viskositat von 14,3 Pa.s bei 23°C.

Beispiel 7

| Reaktionsansatz: | | | |
|---|---|---|---|
| Komponente | eingesetztes Produkt | Menge (g) | n-Mol |
| K1 | Adipinsäure | 1.169 | 8,0 |
| K2 | Phthalsäureanhydrid | 148 | 1,0 |
| K3 | 1,6-Hexandiol | 1.192 | 10,1 |
| K4 | 1,2 Propandiol | 328 | 4,23 |
| K5 | Trimellithsäureanhydrid | 192 | 1,0 |

Die Durchführung der Schmelzkondensation der Komponenten K 1-K 5 erfolgte analog Beispiel 2.

Das erhaltene Polyesterpolyol ist bei 23°C flüssig. Es weist eine Säurenzahl von 3,9 mg KOH/g und eine Hydroxylzahl von 99 mg KOH/g auf.

Die 70 %ige Lösung des Polyesterpolyols in Di-2-ethylhexyl-phthalat hat eine Viskosität von 3,3 Pa.s bei 23°C.

Beispiel 8

| Reaktionsansatz: | | | |
|---|---|---|---|
| Komponente | eingesetztes Produkt | Menge (g) | n-Mol |
| K1 | Adipinsäure | 1.023 | 7,0 |
| K2 | Phthalsäureanhydrid | 148 | 1,0 |
| K3 | 1,6-Hexandiol | 1.250 | 10,6 |
| K4 | 2-Methyl-2-propyl-1,3-propandiol | 410 | 4,5 |
| K5 | Trimellithsäureanhydrid | 384 | 2,0 |

Die Durchführung der Schmelzkondensation der Komponenten K 1-K 5 erfolgte analog Beispiel 2.

Das erhaltene Polyesterpolyol ist bei 23°C flüssig. Es weist eine Säurenzahl von 4,7 mg KOH/g und eine Hydroxylzahl von 125 mg KOH/g auf.

Die 70 %ige Lösung des Polyesterpolyols in Di-2-ethylhexyl-phthalat hat eine Viskosität von 5,9 Pa.s bei 23°C.

Beispiel 9

| Reaktionsansatz: | | | |
|---|---|---|---|
| Komponente | eingesetztes Produkt | Menge (g) | n-Mol |
| K1 | Adipinsäure | 1.169 | 8,0 |
| K2 | Phthalsäureanhydrid | 148 | 1,0 |
| K3 | 1,6-Hexandiol | 1.192 | 10,1 |
| K4 | 2-Ethyl-1,3-hexandiol | 629 | 4,3 |
| K5 | Trimesinsäure | 210 | 1,0 |

Die Durchführung der Schmelzkondensation der Komponenten K 1-K 5 erfolgte analog Beispiel 1.

Das erhaltene Polyesterpolyol ist bei 23°C flüssig. Es weist eine Säurezahl von 2,0 mg KOH/g und eine Hydroxylzahl von 114 mg KOH/g auf.

Die 70 %ige Lösung des Polyesterpolyols in Di-2-ethylhexyl-phthalat hat eine Viskosität von 1,9 Pa.s bei 23°C.

Beispiel 10

| Reaktionsansatz: | | | |
|---|---|---|---|
| Komponente | eingesetztes Produkt | Menge (g) | n-Mol |
| K1 | Adipinsäure | 585 | 4,0 |
| K2 | Azelainsäure | 885 | 4,0 |
| K3 | Phthalsäureanhydrid | 148 | 1,0 |
| K4 | 1,6-Hexandiol | 410 | 10,1 |
| K5 | 1,3 Butandiol | 1.192 | 4,3 |
| K6 | Trimesinsäure | 210 | 1,0 |

Die Durchführung der Schmelzkondensation der Komponenten K 1-K 6 erfolgte analog Beispiel 1.

Das erhaltene Polyesterpolyol ist bei 23°C flüssig. Es weist eine Säurenzahl von 4,2 mg KOH/g und eine Hydroxylzahl von 96 mg KOH/g auf.

Die 70 %ige Lösung des Polyesterpolyols in Di-2-ethylhexyl-phthalat hat eine Viskosität von 2,7 Pa.s bei 23°C.

Beispiel 11

| Reaktionsansatz: | | | |
|---|---|---|---|
| Komponente | eingesetztes Produkt | Menge (g) | n-Mol |
| K1 | Adipinsäure | 1.023 | 7,0 |
| K2 | Phthalsäureanhydrid | 148 | 1,0 |
| K3 | 1,6-Hexandiol | 1.251 | 10,6 |
| K4 | 2-Ethyl-1,3-hexandiol | 658 | 4,5 |
| K5 | Trimellithsäureanhydrid | 384 | 2,0 |

Die Durchführung der Schmelzkondensation der Komponenten K 1-K 5 erfolgte analog Beispiel 2.

Das erhaltene Polyesterpolyol ist bei 23°C flüssig. Es weist eine Säurenzahl von 3,1 mg KOH/g und eine Hydroxylzahl von 129 mg KOH/g auf.

Die 70 %ige Lösung des Polyesterpolyols in Di-2-ethylhexyl-phthalat hat eine Viskosität von 4,2 Pa.s bei 23°C.

Beispiel 12

| Reaktionsansatz: | | | |
|---|---|---|---|
| Komponente | eingesetztes Produkt | Menge (g) | n-Mol |
| K1 | Adipinsäure | 512 | 3,5 |
| K2 | Azelainsäure (85%ig) | 775 | 3,5 |
| K3 | Phthalsäureanhydrid | 148 | 1,0 |
| K4 | 1,6-Hexandiol | 1.781 | 15,1 |
| K5 | Trimesinsäure | 420 | 2,0 |

Die Durchführung der Schmelzkondensation erfolgte analog Beispiel 1.

Das erhaltene Polyesterpolyol ist bei 23°C flüssig. Es weist eine Säurezahl von 4,4 mg KOH/g und eine Hydroxylzahl von 111 mg KOH/g auf.

Die 70 %ige Lösung des Polyesterpolyols in Di-2-ethylhexyl-phthalat hat eine Viskosität von 5,8 Pa.s bei 23°C.

Beispiel 13

| Reaktionsansatz: | | | |
|---|---|---|---|
| Komponente | eingesetztes Produkt | Menge (g) | n-Mol |
| K1 | Adipinsäure | 512 | 3,5 |
| K2 | Azelainsäure (85 %ig) | 775 | 3,5 |
| K3 | Phthalsäureanhydrid | 148 | 1,0 |
| K4 | 1,6-Hexandiol | 1.510 | 12,8 |
| K5 | 1,2 Propandiol | 175 | 2,3 |
| K6 | Trimesinsäure | 420 | 2,0 |

Die Durchführung der Schmelzkondensation der Komponenten K 1-K 6 erfolgte analog Beispiel 1.

Das erhaltene Polyesterpolyol ist bei 23°C flüssig. Es weist eine Säurezahl von 3,0 mg KOH/g und eine Hydroxylzahl von 94 mg KOH/g auf.

Die 70 %ige Lösung des Polyesterpolyols in Di-2-ethylhexyl-phthalat hat eine Viskosität von 12,0 Pa.s bei 23 °C.

Beispiel 14

| Reaktionsansatz: | | | |
|---|---|---|---|
| Komponente | eingesetztes Produkt | Menge (g) | n-Mol |
| K1 | Adipinsäure | 658 | 4,5 |
| K2 | Azelainsäure (85 %ig) | 996 | 4,5 |
| K3 | 1,4-Butandiol | 911 | 10,1 |
| K4 | Neopentylglykol | 447 | 4,3 |
| K5 | Trimellithsäureanhydrid | 192 | 1,0 |

Die Durchführung der Schmelzkondensation der Komponenten K 1-K 5 erfolgte analog Beispiel 2.

Das erhaltene Polyesterpolyol ist bei 23 °C flüssig. Es weist eine Säurenzahl von 4,6 mg KOH/g und eine Hydroxylzahl von 83 mg KOH/g auf.

Die 70 %ige Lösung des Polyesterpolyols in Di-2-ethylhexyl-phthalat hat eine Viskosität von 5,6 Pa.s bei 23 °C.

Beispiel 15

| Reaktionsansatz: | | | |
|---|---|---|---|
| Komponente | eingesetztes Produkt | Menge (g) | n-Mol |
| K1 | Adipinsäure | 585 | 4,0 |
| K2 | Azelainsäure (85 %ig) | 885 | 4,0 |
| K3 | Phthalsäureanhydrid | 148 | 1,0 |
| K4 | 1,4-Butandiol | 911 | 10,1 |
| K5 | Neopentylglykol | 447 | 4,3 |
| K6 | Trimesinsäure | 210 | 1,0 |

Die Durchführung der Schmelzkondensation der Komponenten K 1-K 6 erfolgte analog Beispiel 1.

Das erhaltene Polyesterpolyol ist bei 23 °C flüssig. Es weist eine Säurenzahl von 4,3 mg KOH/g und eine Hydroxylzahl von 69 mg KOH/g auf.

Die 70 %ige Lösung des Polyesterpolyols in Di-2-ethylhexyl-phthalat hat eine Viskosität von 11,3 Pa.s bei 23 °C.

Beispiel 16

| Reaktionsansatz: | | | |
|---|---|---|---|
| Komponente | eingesetztes Produkt | Menge (g) | n-Mol |
| K1 | Adipinsäure | 1.023 | 7,0 |
| K2 | Phthalsäureanhydrid | 148 | 1,0 |
| K3 | 1,6-Hexandiol | 1.546 | 13,1 |
| K4 | Neopentylglykol | 208 | 2,0 |
| K5 | Trimesinsäure | 210 | 1,0 |
| K6 | Trimellithsäureanhydrid | 192 | 1,0 |

Durchführung der Schmelzkondensation:

Die Komponenten K 1-K 5 sowie 1/3 K 6 wurden im Reaktionsgefäß (Beispiel 2) vorgelegt und innerhalb von 1,5 Stunden bei einer Innentemperatur von 148 bis 160°C unter Normaldruck verestert (Destillat 1 = 183 g). Anschließend wurden die restlichen 2/3 K 6 zugesetzt und innerhalb von 2,5 Stunden die Temperatur von 158°C auf 190°C erhöht Bei 190°C ±2° wurde weiter unter Normaldruck über 15 Stunden verestert (Destillat 2 = 178 g). Danach wurde stufenweise Vakuum angelegt und 5 Stunden bei 190°C ±2° bei 20 mbar nach verestert (Destillat 3 = 77 g).

Das erhaltene Polyesterpolyol ist bei 23°C flüssig.

Es weist eine Säurezahl von 4,3 mg KOH/g und eine Hydroxylzahl von 123 mg KOH/g auf.

Die 70 %ige Lösung des Polyesterpolyols in Di-2-ehtylhexyl-phthalat hat eine Viskosität von 5,9 Pa.s bei 23°C.

Beispiel 17 (Vergleichsbeispiel 1)

| Reaktionsansatz | | | |
|---|---|---|---|
| Komponente | eingesetztes Produkt | Menge (g) | n-Mol |
| K1 | Adipinsäure | 1.169 | 8,0 |
| K2 | 1,6-Hexandiol | 944 | 8,0 |
| K3 | 1,1,1-Trimethylolpropan | 268 | 2,0 |

Die Durchführung der Schmelzkondensation (K 1-K 3) erfolgte analog Beispiel 1.

Das erhaltene Polyesterpolyol ist bei 23°C wachsartig-fest

Es weist eine Säurezahl von 4,2 mg KOH/g und eine Hydroxylzahl von 157 mg KOH/g auf. Das Polyesterpolyol ist in Di-2-ethylhexyl-phthalat nicht homogen löslich. Beim Versuch eine 70 %ige Lösung herzustellen, erhält man zwei Schichten, bestehend aus dem Polyesterpolyol und DOP.

Für die Beurteilung der Haftfestigkeit mußte das Polyesterpolyol daher zu 70 % in Ethylacetat gelöst werden. Das Ergebnis ist aus Tabelle 1 ersichtlich.

Beispiel 18 (Vergleichsbeispiel 2)

| Reaktionsansatz: | | | |
|---|---|---|---|
| Komponente | eingesetztes Produkt | Menge (g) | n-Mol |
| K1 | Adipinsäure | 1.169 | 8,0 |
| K2 | Phthalsäureanhydrid | 296 | 2,0 |
| K3 | 1,6-Hexandiol | 354 | 3,0 |
| K4 | 1,2-Propandiol | 533 | 7,0 |
| K5 | 1,1,1-Trimethylolpropan | 335 | 2,5 |

Die Durchführung der Schmelzkondensation (K 1-K 5) erfolgte analog Beispiel 1.

Das erhaltene Polyesterpolyol ist bei 23°C hochviskos.

Es weist eine Säurezahl von 1,8 mg KOH/g und eine Hydroxylzahl von 153 mg KOH/g auf. Das Polyesterpolyol ist in Di-2-ethylhexyl-phthalat nicht homogen löslich, man erhält zwei Schichten.

Für die Beurteilung der Haftfestigkeit wurde das Polyesterpolyol daher zu 70 % in Dibutylphthalat gelöst. Das Ergebnis ist ausTabelle 1 ersichtlich.

Beispiel 19

Dieses Beispiel zeigt die guten Haftfestigkeiten von mit den erfindungsgemäßen Polyesterpolyolen hergestellten PVC-Beschichtungen.

Es wird ein PVC-Plastisol hergestellt aus

300 g PVC, Pastentyp (K-Wert 70, nach DIN 53 726)

300 g PVC, Pastentyp (K-Wert 80, nach DIN 53 726)

200 g $C_{10}$-$C_{18}$-Alkansulfonsäurephenylester

200 g Di-2-ethylhexylphthalat

60 g Kaolin

20 g dibasisches Bleiphosphit

10 g Chromoxidgrün-Pigment.

Durch zweimaliges Abreihen über einen Dreiwalzenstuhl (three roll mill) erhält man ein homogenes PVC-Plastisol, das anschließend 24 Stunden bei 23°C gealtert wird.

Auf 100 g dieses so hergestellten PVC-Plastisols werden jeweils 7 g der erfindungsgemäßen Polyesterpolyole (70 %ig in Di-2-ethylhexylphthalat (DOP)) aus den Beispielen 1 bis 16 und 6 g Desmodur L75® (polyfunktionelles Isocyanat der Bayer AG) zugesetzt und homogen verrührt.

Diese einzelnen Mischungen werden nun mit 100 g/m$^2$ auf Testgewebe aus Polyester (1 100 dtex, Bindung L 1/1, Einstellung 9/9 fd/cm) und auf Polyamid-6,6 (940 dtex, Bindung L 1/1, Einstellung 8,5/9,5 fd/cm) mit einem Rakelmesser aufgetragen und bei 140°C für eine Minute in einem mit Heißluft beheizten Umlufttrockenschrank geliert.

Auf diesen Grundstrich wird nun ein Deckstrich aus dem vorstehend genannten PVC-Plastisol ohne Polyol- und Isocyanatkomponente, ebenfalls mit einem Rakelmesser, aufgestrichen und der Verbund bei 180°C in einem Umlufttrockenschrank ausgeliert.

Aus der Beschichtung werden nun 5 cm breite und 26 cm lange Probekörper ausgestanzt und die Haftfestigkeit nach DIN 53 357 gemessen.

Die jeweiligen Haftfestigkeiten sind in Tabelle 1 zusammengestellt.

Tabelle 1

| Zusätze zu jeweils 100 g PVC-Plastisol 7 g Polyesterpolyol (70%ig in DOP) aus Beispiel 1-16 6 g Desmodur L 75 | | Haftfestigkeit (N/5 cm) auf | |
|---|---|---|---|
| lfd.Nr. | Polyesterpolyol aus Beispiel | Polyester 1 100 dtex | Polyamid-6,6 940 dtex |
| a | ohne Zusätze (vgl. Beispiel) | 45 | 35 |
| b | Beispiel 1 | 205 | 175 |
| c | 2 | 230 | 225 |
| d | 3 | 165 | 160 |
| e | 4 | 160 | 155 |
| f | 5 | 150 | 135 |
| g | 6 | 250 | 240 |
| h | 7 | 165 | 140 |
| i | 8 | 155 | 145 |
| k | 9 | 145 | 125 |
| l | 10 | 225 | 190 |
| m | 11 | 160 | 135 |
| n | 12 | 155 | 130 |
| o | 13 | 240 | 210 |
| p | 14 | 190 | 145 |
| q | 15 | 230 | 195 |
| r | 16 | 160 | 165 |
| s | Beispiel 17 (Vgl.-Beispiel 1) (70%ig in Ethylacetat) | 110 | 120 |
| t | Beispiel 18 (Vgl.-Beispiel 2) (70 %ig in Dibutylphthalat) | 60 | 75 |

Es ist deutlich ersichtlich, daß mit allen erfindungsgemäßen Polyesterpolyolen (lfd-Nr. b-r) sowohl auf Polyester als auch auf Polyamid-6,6-Geweben erheblich verbesserte Haftfestigkeiten erreicht werden als bei dem Beispiel ohne Haftvermittler-Zusatz (lfd.-Nr. a) oder bei den Beispielen 17 (lfd-Nr. s) und 18 (lfd-Nr. t).

**Patentansprüche**

1. Polyesterpolyole mit einer Säurezahl unter 10, einer Hydroxylzahl von 50 bis 200, einer Hydroxylfunktionalität von über 2, einem als Zahlenmittel $M_n$ bestimmten Molekulargewicht von 800 bis 5000, welche bei 23°C flüssig oder mit einer Konzentration von mindestens 70 Gew.-% in Di-2-ethylhexylphthalat homogen löslich sind und wobei die Viskosität der 70 %igen Lösung im Bereich von 1 bis 35 Pa.s liegt, hergestellt aus

   A) gegebenenfalls aromatischen Dicarbonsäuren enthaltenden aliphatischen $C_6$-$C_{10}$-Dicarbonsäuren,
   B) 1,6-Hexandiol und gegebenenfalls 1,4-Butandiol und
   C) einer oder mehreren aromatischen Tricarbonsäuren,
   wobei die Komponenten A), B) und C) in einem Molverhältnis von 1:1:(0,05-0,4) vorhanden sind.

2. Polyesterpolyole gemäß Anspruch 1, dadurch gekennzeichnet, daß als Komponente B) 1,4-Butandiol eingesetzt wird, mit der Maßgabe, daß dann Komponenten A) aus mindestens zwei aliphatischen Dicarbonsäuren besteht, wobei das Verhältnis der Dicarbonsäuren mit einer geringeren Kohlenstoffzahl zu den Dicarbonsäuren mit einer höheren Kohlenstoffzahl bei 90:10 bis 30:70 liegt, und zusätzlich bis zu 40 Mol-% an verzweigten $C_5$-$C_8$-Alkandiolen enthält.

3. Verwendung der Polyesterpolyole nach Ansprüchen 1 und 2 als Haftvermittlerkomponente für Polymersysteme.

4. Verwendung der Polyesterpolyole nach Ansprüchen 1 und 2 als Polymerweichmacher.